# FASCICULE DE BREVET EUROPEEN

(11) **EP 2 214 937 B1**
(45) Date de publication et mention de la délivrance du brevet: **31.08.2016**
(21) Numéro de dépôt: 08854321.0
(22) Date de dépôt: 18.11.2008
(51) Int. Cl.: B60S 1/40

(54) **PLATEFORME DE CONNEXION D'UN BALAI D'ESSUIE-GLACE POUR VEHICULE AUTOMOBILE**
VERBINDUNGSPLATTFORM FÜR EIN SCHEIBENWISCHERBLATT EINES KRAFTFAHRZEUGS
CONNECTION PLATFORM FOR A WINDSCREEN WIPER BLADE OF A MOTOR VEHICLE

(30) Priorité: 28.11.2007 FR 0708330
(43) Date de publication de la demande: 11.08.2010
(73) Titulaire: Valeo Systèmes d'Essuyage, 78321 La Verrière (FR)
(72) Inventeur: ESPINASSE, Philippe, F-63114 Coudes (FR)
(86) Numéro de dépôt international: PCT/EP2008/065745
(87) Numéro de publication internationale: WO 2009/068457

(56) Documents cités:
- EP-A- 0 841 229
- EP-A- 1 795 406
- EP-A1- 2 150 444
- WO-A1-2009/068358
- DE-A1-102005 016 485
- FR-A- 2 847 221
- FR-A- 2 890 924
- FR-A1- 2 879 986

## Description

La présente invention concerne une plateforme de connexion d'un balai d'essuie-glace pour véhicule automobile. Elle concerne également un balai d'essuie-glace comprenant ladite plateforme de connexion et un dispositif d'essuyage comprenant ledit balai d'essuie-glace.

L'invention trouve une application particulièrement avantageuse, mais non exclusive, dans le domaine des systèmes d'essuyage pour véhicules automobiles.

Actuellement, la majorité des balais d'essuie-glace utilisés sont des balais dits classiques, comportant une structure à palonniers.

Ce type de balai d'essuie-glace est peu à peu remplacé par une nouvelle génération de balais d'essuie-glace dits plats, encore appelés « flat blade », qui présentent la particularité de ne plus comporter de structure à palonniers. Les balais d'essuie-glace plats comprennent toujours une lame d'essuyage souple, mais avec la différence que l'armature externe chargée de la supporter est ici remplacée par une structure flexible directement intégrée à la lame.

Par ailleurs, de même que les balais classiques de l'état de la technique, les balais plats comportent des moyens de connexion permettant leur raccordement à des bras d'actionnement de forme appropriée. On rappellera à cet égard qu'il existe toutes sortes de bras d'actionnement, comme les bras crochets, les bras à axe de pivotement latéral, les bras à clippage longitudinal, etc.

Ces moyens de connexion comprennent, d'une part, une plateforme de connexion ménagée sur le balai d'essuyage, et, d'autre part, un connecteur de liaison au bras d'actionnement, destiné à être assemblé et verrouillé sur la plateforme de connexion. En conséquence, le connecteur de liaison comporte deux types de moyens de connexion, à savoir des moyens permettant le raccordement du bras d'actionnement sur le connecteur, soit directement soit indirectement par l'intermédiaire d'une pièce d'adaptation, et des moyens d'assemblage et de verrouillage du connecteur sur la plateforme de connexion.

On comprend dans ces conditions qu'aujourd'hui les systèmes d'essuyage à balais d'essuie-glace plats ne sont pas standardisés, notamment au niveau des moyens de connexion chargés d'assurer leur montage. Il en résulte un grand nombre de connecteurs sur le marché qui doivent intégrer des moyens de connexion spécifiques tenant compte à la fois de tous les types de plateforme de connexion existants et de tous les types de bras d'actionnement existants.

Cependant, la multiplication des références au stade de la production et/ou de la distribution se traduit par un coût significatif. C'est pourquoi, faute de standardisation, les balais plats ne sont pas produits pour des raisons de coût pour toutes les gammes de véhicules de sorte que tous les utilisateurs ne peuvent adapter ce type de balais sur leur véhicule, notamment lorsque le véhicule a été conçu pour le montage de balais classiques.

Pour tenter de remédier à cette situation, il a été proposé dans la demande internationale WO2006/069648 une plateforme de connexion unique capable de recevoir des connecteurs adaptés à divers types de bras d'actionnement sur une même face, dite face d'assemblage. Plus spécialement, la plateforme de connexion décrite dans ce document comporte, d'une part, une butée pour recevoir une extrémité de connecteur, et, d'autre part, un bras élastique pour le verrouillage de l'autre extrémité du connecteur.

L'assemblage et le verrouillage du connecteur sur cette plateforme de connexion connue exigent cependant de la part de l'utilisateur d'effectuer deux mouvements successifs, à savoir un premier mouvement pour amener une extrémité du connecteur contre la butée de la plateforme, puis un deuxième mouvement de pivotement du connecteur autour de la butée de manière à engager l'autre extrémité du connecteur dans le bras élastique par effet de clippage.

Le document FR 287 998 6 A1 décrit un ensemble selon le préambule de la revendication 1.

L'invention a pour but de proposer une alternative à la plateforme de connexion connue de la demande internationale précitée qui permettrait de simplifier les manoeuvres à effectuer pour assembler et verrouiller le connecteur sur la plateforme.

Ce but est atteint, conformément à l'invention définie dans la revendication 1, grâce à une plateforme de connexion d'un balai d'essuie-glace pour véhicule automobile, destiné à recevoir sur une face d'assemblage un connecteur de liaison à un bras d'actionnement, remarquable en ce que ladite plateforme comprend des moyens de verrouillage par déformation élastique réversible, aptes à bloquer le connecteur dans une direction d'insertion dudit connecteur dans la plateforme sensiblement perpendiculaire à ladite face d'assemblage.

Ainsi, avec la plateforme de connexion selon l'invention, un seul mouvement est nécessaire pour assembler et verrouiller le connecteur sur la plateforme, c'est-à-dire un mouvement dans ladite direction d'insertion.

Selon l'invention, lesdits moyens de verrouillage par déformation élastique réversible comprennent au moins une fourche formée par deux bras élastiques, destinée à recevoir un plot ménagé sur le connecteur. En particulier, ladite plateforme comprend deux paires de fourches disposées respectivement au voisinage de chaque extrémité de la plateforme.

L'invention concerne également un balai d'essuie-glace, remarquable en ce qu'il comprend une plateforme de connexion selon l'invention.

Enfin, l'invention concerne en outre un système d'essuyage, remarquable en ce qu'il comprend un balai d'essuie-glace selon l'invention et un connecteur relié à un bras d'actionnement d'un mécanisme motorisé d'essuyage.

La description qui va suivre en regard des dessins annexés, donnés à titre d'exemples non limitatifs, fera bien comprendre en quoi consiste l'invention et comment elle peut être réalisée.
La figure 1 est une vue en perspective éclatée d'un système d'essuyage comportant une plateforme de connexion conforme à l'invention.
La figure 2 est une vue en perspective de la plateforme de connexion et du connecteur de liaison de la figure 1.
La figure 3 est une vue en perspective de la partie inférieure du connecteur de liaison de la figure 2.
Les figures 4a à 4c sont des vues de côté schématiques illustrant l'assemblage et le verrouillage d'un connecteur de liaison sur une plateforme de connexion conforme à l'invention.

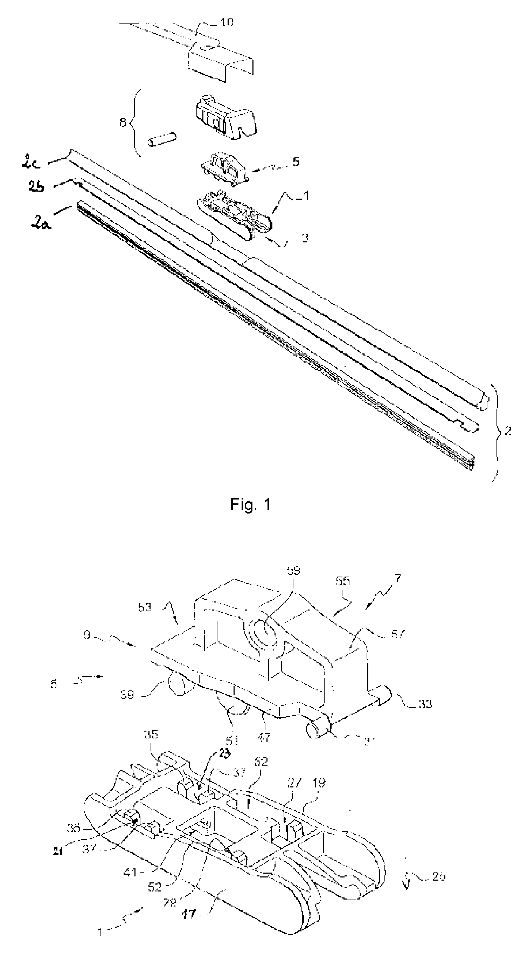

Sur la figure 1, est représentée une plateforme 1 de connexion de forme allongée et destinée à être monté sur un balai d'essuyage 2 dans un canal 3 de maintien traversant longitudinalement la plateforme 1. Le balai d'essuie-glace 2 comprend une lame d'essuyage 2a, une structure flexible, encore appelée vertèbre, 2b et un déflecteur aérodynamique 2c. La plateforme 1 s'adapte plus particulièrement à un balai d'essuie-glace comme celui connu de la demande internationale WO2006/069648.

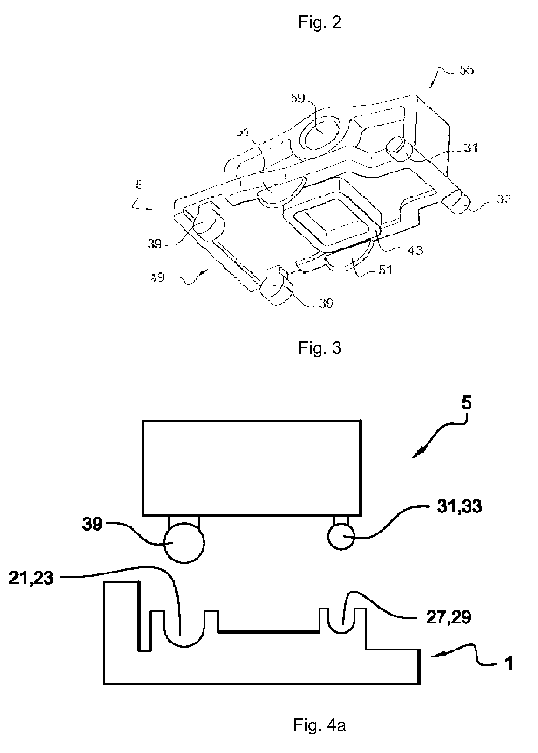

Un connecteur 5 de liaison présentant également une forme allongée avec une première 7 et une seconde 9 extrémités (figure 2) est apte à être relié, directement ou par l'intermédiaire d'une pièce supplémentaire d'adaptation 8, à un bras 10 d'actionnement.

A chaque type d'attache de bras d'actionnement, comme par exemple des bras crochets, des bras à axe de pivotement latéral, des bras à clippage/encliquetage longitudinal, etc., est associé un connecteur 5 spécifique, mais chacun de ces connecteurs s'adapte à la même plateforme 1 de connexion par une interface standard. Dans l'exemple de réalisation montré sur la figure 1, le connecteur 5 est réalisé pour être relié à un bras 10 d'actionnement à encliquetage longitudinal.

A l'état assemblé, la balai d'essuyage 2, la plateforme 1 de connexion, le connecteur 5 et le bras 10 d'actionnement d'un mécanisme motorisé d'essuyage font partie d'un système d'essuyage de vitres d'un véhicule automobile, comme le pare-brise ou la lunette arrière.

On peut voir sur la figure 2 que le connecteur 5 se fixe sur la face de la plateforme 1 opposée à celle portant le canal 3 de maintien de la lame 2 d'essuyage. Dans la suite, cette face sera désignée sous le terme de face d'assemblage.

Le connecteur 5 de liaison est prévu pour être inséré dans la plateforme 1 de connexion selon une direction perpendiculaire à la face d'assemblage, représentée par la flèche 25 sur la figure 2.

De manière à faciliter l'insertion du connecteur 5 dans la plateforme 1 parallèlement à la direction 25, des portions 17, 19 de jupes latérales de la plateforme 1 sont prévues pour assurer un guidage latéral du connecteur.

Par ailleurs, la plateforme 1 de connexion comprend des moyens de verrouillage par déformation élastique réversible, aptes à bloquer le connecteur dans la direction 25 d'insertion dudit connecteur 5 dans la plateforme 1.

Dans l'exemple de la figure 2, ces moyens de verrouillage sont réalisés par des bras élastiques constituant des fourches 21, 23 et 27, 29. Une première paire de fourches 21, 23 formées par les bras 35, 37 est destinée à recevoir deux plots cylindriques 39 ménagés à l'extrémité 9 du connecteur 5, tandis que les fourches 27, 29 sont destinées à recevoir deux plots cylindriques 31, 33 ménagés à l'autre extrémité 7 du connecteur.

Comme les fourches 21, 23, 27 et 29 sont prévues à l'intérieur de la plateforme 1, c'est-à-dire entre les jupes latérales 17, 19, l'encombrement de la plateforme est réduit et les fourches sont mieux protégées, par exemple contre des cassures.

Avantageusement, la plateforme 1 de connexion comprend en outre une forme 41 de centrage apte à coopérer avec une forme complémentaire 43 du connecteur 5 que l'on peut voir sur la figure 3.

Dans l'exemple de réalisation montré aux figures 2 et 3, la forme 41 de centrage est réalisée par une ouverture carrée dans laquelle une protubérance 43 de forme carrée complémentaire portée par le connecteur 5 peut être insérée.

Avantageusement, la plateforme 1 est réalisée en une seule pièce de matière plastique, de préférence par injection.

Le connecteur 5 comprend donc une plaque 47 portant sur sa face inférieure 49 les plots cylindriques 39 et 31, 33, ainsi que le carré 43 de centrage.

De plus, on peut prévoir sur la face inférieure 49 des protubérances 51 sous forme de demi-disques de positionnement. Ces demi-disques 51 sont placés de part et d'autre du carré 43 de centrage et aptes à se loger dans des fentes 52 de positionnement appartenant à la plateforme 1 et situées entre une paroi formant l'ouverture 41 de centrage et les jupes latérales 17, 19. Ainsi, si le connecteur 5 n'est pas aligné en face de la plateforme 1, ces demi-disques 51 empêchent l'assemblage du connecteur 5 avec la plateforme 1, prévenant ainsi toute détérioration.

Sur sa face supérieure 53, le connecteur 5 est surmonté d'une attache 55 pour un bras 10 d'actionnement à encliquetage longitudinal. A cet effet, l'attache 55 comprend une structure 57 avec un trou traversant 59 pour recevoir un axe de pivotement.

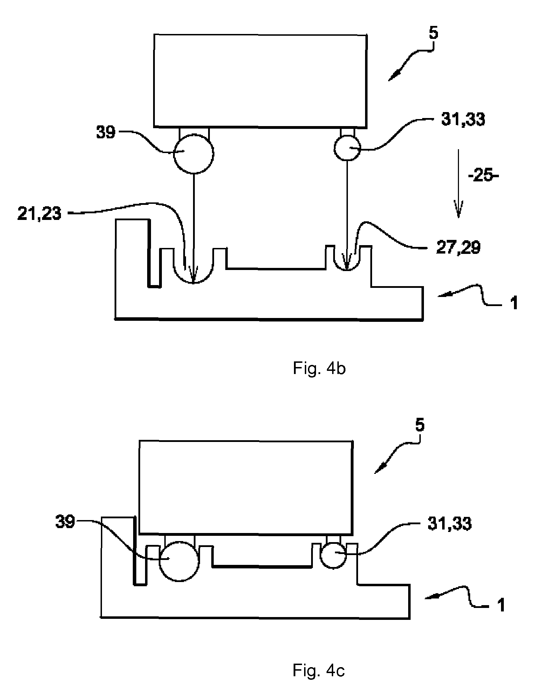

Sur les figures 4a à 4c, on a illustré de manière très schématique les étapes de l'assemblage et du verrouillage du connecteur 5 sur la plateforme 1.

Dans un premier temps, le connecteur 5 est présenté en face de la plateforme 1 de manière que les plots cylindriques 39 et 31, 33 soient placés en regard des fourches 21, 23 et 27, 29 de bras élastiques.

Puis, le connecteur 5 est amené sur la plateforme 1 dans un mouvement parallèle à la direction 25 d'insertion. Les plots cylindriques du connecteur 5 pénètrent à l'intérieur des fourches de la plateforme 1 en écartant les bras élastiques.

Lorsque le connecteur 5 est en place dans la plateforme 1, les bras élastiques se referment et immobilisent les plots cylindriques. Le connecteur 5 est alors verrouillé sur la plateforme 1.

On comprend que cette solution apporte une grande simplicité d'assemblage pour l'utilisateur final qui n'a qu'un seul mouvement de clippage à effectuer pour assembler le balai.

## Revendications

1. Ensemble comprenant une plateforme (1) de connexion d'un balai d'essuie-glace pour véhicule automobile et un connecteur (5) de liaison à un bras (10) d'actionnement, le connecteur (5) de liaison comporte deux types de moyens de connexion, à savoir des moyens permettant le raccordement du bras (10) d'actionnement sur le connecteur (5), soit directement soit indirectement par l'intermédiaire d'une pièce d'adaptation, et des moyens d'assemblage et de verrouillage du connecteur sur la plateforme (1) de connexion, ladite plateforme comprenant une face d'assemblage recevant le connecteur (5), **caractérisé en ce que** ladite plateforme comprend des moyens (21, 23, 27, 29) de verrouillage par déformation élastique réversible qui bloquent le connecteur (5) dans une direction (25) d'insertion dudit connecteur dans la plateforme (1) perpendiculaire à ladite face d'assemblage, et **en ce que** lesdits moyens de verrouillage par déformation élastique réversible comprennent au moins une fourche (21, 23, 27, 29) formée par deux bras élastiques, destinée à recevoir un plot (39, 31, 33) ménagé sur le connecteur (5).

2. Ensemble selon la revendication 1, dans laquelle ladite plateforme (1) comprend deux paires de fourches disposées respectivement au voisinage de chaque extrémité (7, 9) de la plateforme.

3. Ensemble la revendication 1 ou 2, dans laquelle ladite plateforme (1) comprend des moyens de positionnement (52) permettant un positionnement correct du connecteur (5) sur la plateforme (1).

4. Balai d'essuie-glace (2), **caractérisé en ce qu'**il comprend un ensemble selon l'une quelconque des revendications 1 à 3.

5. Dispositif d'essuyage, **caractérisé en ce qu'**il comprend un balai d'essuie-glace selon la revendication 4, ledit connecteur (5) étant relié à un bras (10) d'actionnement d'un mécanisme motorisé d'essuyage.

## Patentansprüche

1. Anordnung, umfassend eine Plattform (1) zum Verbinden eines Scheibenwischerblatts für ein Kraftfahrzeug und ein Verbindungsstück (5) zum Verbinden an einem Betätigungsarm (10), wobei das Verbindungsstück (5) zum Verbinden zwei Arten von Verbindungsmitteln aufweist, und zwar Mittel, die das Verbinden des Betätigungsarms (10) auf dem Verbindungsstück (5) entweder direkt oder indirekt über ein Anpassstück ermöglichen, und Mittel zum Montieren und zum Verriegeln des Verbindungsstücks auf der Plattform (1) zum Verbinden, wobei die Plattform eine Montagefläche aufweist, die das Verbindungsstück (5) aufnimmt, **dadurch gekennzeichnet, dass** die Plattform Mittel (21, 23, 27, 29) zum Verriegeln durch reversible elastische Verformung aufweist, die das Verbindungsstück (5) in einer Richtung (25) des Einsetzens des Verbindungsstücks in die Plattform (1) senkrecht zu der Montagefläche blockieren, und dass die Mittel zum Verriegeln durch reversible elastische Verformung mindestens eine Gabel (21, 23, 27, 29) aufweisen, die durch zwei elastische Arme gebildet ist, die dazu bestimmt ist, einen Zapfen (39, 31, 33) aufzunehmen, der auf dem Verbindungsstück (5) ausgebildet ist.

2. Anordnung nach Anspruch 1, wobei die Plattform (1) zwei Paar Gabeln aufweist, die jeweils in der Nähe von jedem Ende (7, 9) der Plattform angeordnet sind.

3. Anordnung nach Anspruch 1 oder 2, wobei die Plattform (1) Mittel zum Positionieren (52) aufweist, die ein korrektes Positionieren des Verbindungsstücks (5) auf der Plattform (1) ermöglichen.

4. Scheibenwischerblatt (2), **dadurch gekennzeichnet, dass** es eine Anordnung nach einem der Ansprüche 1 bis 3 aufweist.

5. Wischvorrichtung, **dadurch gekennzeichnet, dass** sie ein Scheibenwischerblatt nach Anspruch 4 aufweist, wobei das Verbindungsstück (5) mit einem Betätigungsarm (10) eines motorisierten Wischmechanismus verbunden ist.

## Claims

1. An assembly comprising a connection platform (1) of a windscreen wiper blade for a motor vehicle, and a connector (5) for connection to an activation arm (10), the connector (5) comprises two types of connection means, namely means making it possible to connect the actuating arm (10) to the connector (5), either directly or indirectly via the intermediary of an adaptor, and means for assembling and locking the connector on the connection platform (1), said platform comprising an assembly face that receives the connector (5), **characterised in that** said platform comprises means (21, 23, 27, 29) for reversible locking by elastic deformation, that lock the connector (5) in a direction (25) in which said connector is inserted into the platform (1) perpendicular to said assembly face, and **in that** said means for reversible locking by elastic deformation comprise at least one yoke (21, 23, 27, 29) formed by two elastic arms, intended to receive a pin (39, 31, 33) provided on the connector (5).

2. An assembly according to claim 1, wherein said platform (1) includes two pairs of yokes positioned respectively in the vicinity of each end (7, 9) of the platform.

3. An assembly according to claim 1 or 2, wherein said platform (1) comprises positioning means (52) enabling a correct positioning of the connector (5) on the platform (1).

4. A windscreen wiper blade (2), **characterised in that** it comprises an assembly according to any one of claims 1 to 3.

5. A wiping device, **characterised in that** it comprises a windscreen wiper blade according to claim 4, said connector (5) being connected to an arm (10) for actuating a motorised wiping mechanism.
